# EUROPEAN PATENT APPLICATION

(11) **EP 4 489 143 A1**
(43) Date of publication of application: **08.01.2025**
(21) Application number: 23763558.6
(22) Date of filing: 02.03.2023
(51) Int. Cl.: H01M 4/62, H01M 4/13, H01M 4/139, H01M 10/052, H01M 10/0562

(54) **SECONDARY BATTERY BINDER, SECONDARY BATTERY BINDER SHEET, PRODUCTION METHOD THEREFOR, AND SECONDARY BATTERY**

(30) Priority: 02.03.2022 JP 2022032059
(71) Applicant: DAIKIN INDUSTRIES, LTD., Osaka-shi, Osaka 530-0001 (JP)
(72) Inventor: YAMADA, Takaya, Osaka-shi, Osaka 530-0001 (JP); YAMADA, Masahiko, Osaka-shi, Osaka 530-0001 (JP); TERADA, Junpei, Osaka-shi, Osaka 530-0001 (JP); FUJIWARA, Kae, Osaka-shi, Osaka 530-0001 (JP); HIRAGA, Kentarou, Osaka-shi, Osaka 530-0001 (JP); SUI, Xianwei, Osaka-shi, Osaka 530-0001 (JP)
(74) Representative: Hoffmann Eitle
(86) International application number: PCT/JP2023/007908
(87) International publication number: WO 2023/167301

(57) **Abstract**

Provided is a secondary battery mixture that has good properties, a secondary battery mixture sheet containing the mixture, and a secondary battery using the secondary battery sheet. The secondary battery mixture contains a solid-state electrolyte and/or electrode active material, and a binder, wherein the binder is a fibrillatable resin having a fibrous structure with a maximum fibril diameter of 90 nm or more.

## Description

### Technical Field

The present disclosure relates to a secondary battery mixture, a secondary battery mixture sheet, a production method thereof, and a secondary battery.

### Background Art

For a lithium ion secondary battery, it is common to produce a secondary battery sheet by mixing a binder and a solvent with powder components such as an electrode active material and a conductive aid, coating the obtained slurry, and then drying.

Meanwhile, a polytetrafluoroethylene resin is a polymer that readily forms fibrils, and when fibrillated is also used as a binder.

Patent Literature 1 discloses a method for producing an electrode in which polytetrafluoroethylene is fibrillated by subjecting a mixture including an active material and a polytetrafluoroethylene mixed binder material to a high shear treatment with a jet mill.

Patent Literature 2 discloses forming an electrode using a polytetrafluoroethylene resin and extruding a paste.

Non Patent Literature 1 discloses forming an anode using a composition containing an anode active material, a solid-state electrolyte, polytetrafluoroethylene, and xylene.

### Citation List

### Patent Literature

Patent Literature 1: Japanese Translation of PCT International Application Publication No. 2017-517862
Patent Literature 2: International Publication No. WO 2021-043493

### Non Patent Literature

Non Patent Literature 1: NATURE ENERGY 5,299-308(2020)

### Summary of Invention

### Technical Problem

An object of the present disclosure is to provide a secondary battery mixture which has good properties, a secondary battery mixture sheet containing the mixture, and a secondary battery using the secondary battery mixture sheet.

Another object of the present disclosure is to provide a method for producing a secondary battery sheet containing a polytetrafluoroethylene resin having a fine fiber structure.

### Solution to Problem

The present disclosure relates to a secondary battery mixture containing a solid-state electrolyte and/or electrode active material, and a binder, wherein
the binder is a fibrillatable resin, and
the fibrillatable resin has a fibrous structure with a maximum fibril diameter of 90 nm or more.

The present disclosure also relates to a secondary battery mixture containing a solid-state electrolyte and/or electrode active material, and a binder, wherein
the binder is a fibrillatable resin, and
the fibrillatable resin has a fibrous structure in which a third quartile of a fibril diameter is 35 nm or more.

It is preferred that the fibrillatable resin has a fibrous structure with a median value of the fibril diameter of 100 nm or less.

It is preferred that the secondary battery mixture is for a lithium ion secondary battery.

It is preferred that the secondary battery mixture is obtained using a raw material composition containing a solid-state electrolyte and/or electrode active material, and a binder, wherein
the binder in the raw material composition is a powdered polytetrafluoroethylene resin.

It is preferred that the powdered fibrillatable resin has a moisture content of 500 ppm or less.

It is preferred that the powdered polytetrafluoroethylene resin has a standard specific gravity of 2.12 to 2.20.

It is preferred that the powdered polytetrafluoroethylene resin includes 50% by mass or more of a polytetrafluoroethylene resin having a secondary particle size of 450 µm or more.

It is preferred that the powdered polytetrafluoroethylene resin includes 80% by mass or more of a polytetrafluoroethylene resin having a secondary particle size of 450 µm or more.

It is preferred that the secondary battery mixture of the present disclosure further include a positive electrode active material.

It is preferred that the secondary battery mixture is for a solid-state secondary battery.

The present disclosure also relates to a secondary battery mixture sheet including the above-described secondary battery mixture.

The present disclosure also relates to an electrode including the above-described secondary battery mixture sheet.

The present disclosure also relates to a method for producing a secondary battery mixture sheet including:
a step (1) of applying a shear force while mixing a raw material composition including a solid-state electrolyte and/or electrode active material, and a binder;
a step (2) of forming the secondary battery mixture obtained in step (1) into a bulk shape; and
a step (3) of rolling the bulk-shape secondary battery mixture obtained in step (2) into a sheet shape,
wherein the binder is a powdered fibrillatable resin having a fibrous structure with a maximum fibril diameter of 90 nm or more.

The present disclosure also relates to a secondary battery including the above-described secondary battery mixture sheet.

### Advantageous Effects of Invention

By the present disclosure, it is possible to obtain a secondary battery mixture sheet that has good properties.

### Description of Embodiment(s)

The present disclosure will now be described in detail.

The present disclosure provides a secondary battery mixture that can be suitably used in a secondary battery, and a mixture sheet containing the same.

In the secondary battery mixture of the present disclosure and the mixture sheet containing the same, a fibrillatable resin is used as a binder. For a conventional secondary battery mixture, a common method to prepare the secondary battery mixture is to use a resin that dissolves in a solvent, such as a copolymer of vinylidene fluoride and hexafluoropropylene, as a binder, and coat and dry a slurry containing such a binder.

It is known that when shear stress is applied to a polytetrafluoroethylene resin (hereinafter referred to as "PTFE") in a particulate state, the PTFE readily forms fibrils. By utilizing this property of readily forming fibrils, fibrillatable resin can be used as a binder. That is, the fibrillatable resin entangles other powder components and the like to bind the powder components, thereby acting as a binder upon forming of the powder components.

However, even when the fibrillatable resin is used as a binder, if the fibrillation is not sufficient, a good performance cannot be achieved when used as a secondary battery mixture. The present disclosure considers this point, and is characterized by causing fibrillation to occur so that the fibrillatable resin has a fibrous structure with a maximum fibril diameter of 90 nm or more. The maximum fibril diameter refers to the maximum value among the fibril diameters measured for the fibrillated resin. More specifically, the maximum fibril diameter is a value measured by the method described in the Examples.

By having such a maximum fibril diameter, a favorable effect can be obtained in that a sheet can be obtained that is flexible, has excellent mechanical properties, and can be handled without using a support.

The maximum fibril diameter is more preferably 90 nm or more, further preferably 100 nm or more, and particularly preferably 110 nm or more. The upper limit of the maximum fibril diameter is not limited, but may be, for example, not more than 400 nm.

In the second secondary battery mixture in the second aspect of the present disclosure, a third quartile of the fibril diameter is 35 nm or more. The third quartile of the fibril diameter is a value that includes the bottom 75% when the fibril diameters are arranged in order of size. The third quartile of the fibril diameter is a value measured by the measuring method described in the Examples.

The third quartile of the fibril diameter is more preferably 35 nm or more, and further preferably 40 nm or more. The upper limit of the maximum fibril diameter is not limited, but may be, for example, not more than 65 nm.

In the secondary battery mixture of the present disclosure, the median value of the fibril diameter is preferably 100 nm or less. By setting the median value to a range, the fibrillated PTFE can reduce deterioration of the solid-state electrolyte as a binder of the secondary battery mixture, and good performance can be achieved.

Further, in the secondary battery mixture of the present disclosure, the average inter-fibril distance may be 0.25 µm or more and 10 µm or less.

The average inter-fibril distance means the average value of the distance between fibrils present in the x-y plane. The average inter-fibril distance is determined from an image taken by a scanning electron microscope (SEM). It is preferred to satisfy these values because good flexibility can be obtained.

In the secondary battery mixture of the present disclosure, the average node area may be 0.5 µm² or more and 2.0 µm² or less.

The node area can be measured from an SEM photograph. However, if it is necessary for these values to be defined more precisely, image processing may be performed. For example, the each node area can be determined using image analysis software (for example, "NanoHunter NS2K-Pro" by Nano System Co., Ltd.).

The node area is preferably determined by measuring a region equivalent to at least 150 µm × 100 µm within the sample surface.

In the present disclosure, the fibrillatable resin is a resin that readily forms fibrils when shear stress is applied to fibrillatable resin. By using such a fibrillatable resin as the binder, the fibrillated resin can entangle other powder components and the like to bind the powder components, and thereby act as a binder upon forming of the powder components. Examples of the fibrillatable resin include a LCP, cellulose, acrylic resin, ultra-high molecular weight polyethylene, PTFE, and the like. Among them, PTFE is preferred in terms of chemical stability, thermal stability, and processability. In the present disclosure, "powder components" refers to the other powder components constituting the mixture for a secondary battery, and specifically, refers to preferably the solid-state electrolyte and/or electrode active material.

In the present disclosure, the PTFE resin is not limited, and may be a homopolymer or a copolymer that can be fibrillated.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

The above-described "PTFE powder" means a solid state as a powder, not a dispersed state mixed with a liquid medium. The object of the present disclosure can be suitably achieved by producing a secondary battery mixture using the PTFE in such a state, which is a state in which a liquid medium is not present.

It is preferred that the powdered PTFE serving as the raw material for producing the secondary battery mixture of the present disclosure has a moisture content of 500 ppm or less.

Setting the moisture content to 500 ppm or less is preferable in terms of reducing deterioration in the solid-state electrolyte.

More preferably, the moisture content is 300 ppm or less.

The powdered PTFE preferably has a standard specific gravity of 2.12 to 2.20. Having a standard specific gravity within the above range is advantageous in that a secondary battery mixture sheet having a high strength can be produced. The lower limit of the standard specific gravity is more preferably not less than 2.13. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE serving as the raw material for producing the secondary battery mixture of the present disclosure includes preferably 50% by mass or more, and more preferably includes 80% by mass or more, of a polytetrafluoroethylene resin having a secondary particle size of 450 µm or more. When the PTFE having a secondary particle size of 450 µm or more is within the above range, there is an advantage that a high-strength mixture sheet can be produced. By using PTFE with a secondary particle size of 450 µm or more, it is possible to obtain a mixture sheet with lower resistance and high toughness.

The lower limit of the average secondary particle size of the powdered PTFE is more preferably 450 µm, and further preferably 500 µm. The upper limit of the secondary particle size is more preferably not more than 700 µm, and further preferably not more than 600 µm. The secondary particle size can be determined, for example, by a sieving method.

The powdered PTFE serving as the raw material for producing the secondary battery mixture of the present disclosure has an average primary particle size of preferably 150 nm or more because this allows a secondary battery mixture sheet having higher strength and homogeneity to be obtained. More preferably, the average primary particle size is 180 nm or more, further preferably 210 nm or more, and particularly preferably 220 nm or more.

The larger the average primary particle size of the powdered PTFE, the better the formability is. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The powdered PTFE serving as the raw material for producing the secondary battery mixture of the present disclosure may have a core-shell structure. Examples of PTFE having a core-shell structure include a polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

In the present disclosure, the lower limit of the binder content in the secondary battery mixture is preferably 0.2% by mass or more, more preferably 0.3% by mass or more. More preferably, the lower limit is more than 0.5% by mass. The upper limit of the binder content in the secondary battery mixture is preferably 10% by mass or less, more preferably 7% by mass or less, particularly preferably 6% by mass or less, further preferably 1.7% by mass or less, and most preferably 1.0% by mass or less. If the binder is within the above range, it is possible to form a self-supporting sheet having excellent handleability while suppressing an increase in electrode resistance.

The secondary battery mixture of the present disclosure may be used as an electrode for a solid-state battery or as an electrode for a battery containing an electrolyte. Further, the secondary battery mixture of the present disclosure may be used in a solid-state electrolyte layer in a solid-state battery. The object of the present disclosure is achieved by combining the components constituting the mixture depending on these uses and causing fibrillation to occur in such a manner that the above-mentioned parameters are satisfied.

When the electrode is an electrode for a solid-state battery, the secondary battery mixture further contains an electrode active material and a solid-state electrolyte. When the electrode is an electrode for a battery containing an electrolyte, the secondary battery mixture contains an electrode active material. The secondary battery mixture may contain an electrode aid and other components as necessary. Each of the components constituting the electrode will be described in detail below.

### (Electrode active material)

When the secondary battery mixture sheet of the present disclosure is used as a sheet for a positive electrode, the secondary battery mixture sheet includes a positive electrode active material. As the positive electrode active material, a positive electrode active material known as a positive electrode active material for solid-state batteries can be employed. In particular, it is preferable to use a positive electrode active material capable of absorbing and desorbing lithium ions.

The positive electrode active material is not limited as long as it can electrochemically absorb and desorb alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
an alkali metal-manganese spinel composite oxide represented by the formula:

   MₐMn_{2-b}M¹_{b}O₄
wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
an alkali metal-nickel composite oxide represented by the formula:

   MNi_{1-c}M²cO₂
wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
an alkali metal-cobalt composite oxide represented by the formula:

   MCo_{1-d}M³_{d}O₂
wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕCoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g} (4)

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃ (where M is at least one metal selected from the group consisting of Li, Na and K) and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx[Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which Li₂MnO₃ is dissolved as a solid solution in a base of LiNiO₂ or LiCoO₂ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5%, based on the total of the positive electrode active material and lithium phosphate. The upper limit is preferably not more than 10% by mass, more preferably not more than 8% by mass, and further preferably not less than 5%, based on the total of the positive electrode active material and lithium phosphate.

Examples of the conductive polymer include p-doping type conductive polymers and n-doping type conductive polymers. Examples of the conductive polymer include polyacetylene-based polymers, polyphenylene-based polymers, heterocyclic polymers, ionic polymers, ladder and network polymers, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the solid-state electrolyte at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is lower than this lower limit, the amount of dispersion medium required for forming the positive electrode active material layer may increase, the required amounts of the conductive material and the binder may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. Although there is no upper limit, if the tapped density is too large, the diffusion of lithium ions in the positive electrode active material layer using the solid-state electrolyte as a medium becomes rate-determining, and the load characteristics tend to deteriorate. Therefore, the upper limit is preferably not more than 4.0 g/cm³, more preferably not more than 3.7 g/cm³, and further preferably not more than 3.5 g/cm³.

In the present disclosure, the tapped density is determined as the powder filling density (tapped density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance and the occurrence of streaks when forming the positive electrode of the battery, that is, when preparing a slurry of the active material, conductive material, binder, and the like with a solvent and coating the slurry as a thin film. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size of the positive electrode active material is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tapped density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large lithium ion secondary battery for a hybrid automobile or a distributed power source, a high output is required, and it is preferred that the particles of the positive electrode active material are mainly secondary particles.

The particles of the positive electrode active material preferably include 0.5 to 7.0% by volume of fine particles having an average secondary particle size of 40 µm or less and an average primary particle size of 1 µm or less. By containing fine particles with an average primary particle size of 1 µm or less, the contact area with the electrolyte increases, so the diffusion of lithium ions between the sheet for the secondary battery and the electrolyte can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNO₃ is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn is replaced with another transition metal or the like, or a combination of LiFePO₄ and LiCoO₂ or a material in which a part of the Co is replaced with another transition metal or the like.

From the viewpoint of a high battery capacity, the content of the positive electrode active material in the positive electrode mixture is preferably 50 to 99.5% by mass, more preferably 60 to 99% by mass, and more preferably 69 to 96.7% by mass.

Further, the content of the positive electrode active material is preferably 80% by mass or more, more preferably 82% by mass or more, and particularly preferably 84% by mass or more. Further, the upper limit is preferably not more than 99% by mass, more preferably not more than 98% by mass. If the content of the positive electrode active material in the positive electrode mixture is low, the electric capacity may be insufficient. Conversely, if the content is too high, the electron/ion conductivity and strength of the positive electrode may be insufficient.

When using the secondary battery mixture sheet of the present disclosure as a negative electrode sheet, a negative electrode active material is incorporated in the secondary battery mixture sheet. Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly preferably used.

From the viewpoint of a high battery capacity, the content of the negative electrode active material in the negative electrode mixture is preferably 50 to 99.5% by mass, more preferably 60 to 99% by mass, and more preferably 69 to 96.7% by mass.

Further, the content of the negative electrode active material is preferably 80% by mass or more, more preferably 82% by mass or more, and particularly preferably 84% by mass or more. In addition, the upper limit is preferably 99% by mass or less, and more preferably 98% by mass or less. If the content of the negative electrode active material in the negative electrode mixture is low, the electric capacity may be insufficient. Conversely, if the content is too high, the electron/ion conductivity and strength of the negative electrode may be insufficient.

### (Solid-state electrolyte)

The solid-state electrolyte may be a sulfide-based solid-state electrolyte or an oxide-based solid-state electrolyte.

### (Sulfide-based solid-state electrolyte)

Examples of the sulfide-based solid-state electrolyte include a lithium ion conductive inorganic solid-state electrolyte that satisfies the composition represented by the following formula (1):

Liₐ₁M_{b1}P_{c1}S_{d1}Aₑ₁ (1)

wherein M represents an element selected from B, Zn, Sn, Si, Cu, Ga, Sb, Al, Ti, and Ge, A represents an element selected from I, Br, Cl and F, a1 to e1 indicate a composition ratio of each element, a1:b1:c1:d1:e1 satisfies 1 to 12:0 to 5:1:2 to 12:0 to 10, a1 is preferably 1 to 9, more preferably 1.5 to 7.5, b1 is preferably 0 to 3, more preferably 0 to 1, d1 is preferably 2.5 to 10, more preferably 3.0 to 8.5, and e1 is preferably 0 to 5, more preferably 0 to 3.

In the present disclosure, the sulfide-based solid-state electrolyte preferably contains lithium. Lithium-containing sulfide-based solid-state electrolytes are used in solid-state batteries that use lithium ions as carriers, and are particularly preferred for electrochemical devices having a high energy density.

The composition ratio of each element can be controlled by adjusting the blending amount of the raw material compounds when producing the sulfide-based inorganic solid-state electrolyte, as described below.

The sulfide-based inorganic solid-state electrolyte may be amorphous (glass) or crystallized (glass-ceramic), or only partially crystallized. For example, Li-P-S glass containing Li, P, and S, or Li-P-S glass ceramic containing Li, P, and S can be used.

The sulfide-based inorganic solid-state electrolyte can be produced by reacting at least two or more raw materials from among, for example, lithium sulfide (Li₂S), a phosphorus sulfide (for example, diphosphorus pentasulfide (P₂S₅)), elemental phosphorus, elemental sulfur, sodium sulfide, hydrogen sulfide, a lithium halide (for example, LiI, LiBr, LiCl), and a sulfide of the above-described element represented by M (for example, SiS₂, SnS, GeS₂).

As specific examples of the sulfide-based inorganic solid-state electrolyte, examples of raw material combinations are shown below. Examples of such combinations include Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S3, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, and the like. However, the mixing ratio of each raw material is not limited.

In particular, it is preferred that the sulfide-based solid-state electrolyte is a sulfide-based solid-state electrolyte satisfying the composition represented by the following formula (A):

aLi₂S-bX¹S₂-cLiX²-(1-a-b-c)P₂S₅ (A)

wherein 0.6≤a≤0.86, 0≤b≤0.333, 0≤c≤0.3, 0.05≤b+c≤0.4, X¹ represents Ge, Sn, Ti or Si, X² represents Cl, Br, or I, and any one of b or c is not 0.

Specific examples of the sulfide-based solid-state electrolyte represented by the above formula (A) may be selected from any of 0.714 Li₂S - 0.143 SnS₂ - 0.143 P₂S₅ (Li₁₀SnP₂S₁₂ (LSPS)), 0.625 Li₂S - 0.25 LiCl - 0.125 P₂S₅ (Li₆PS₅Cl (LPSCl)), 0.715 Li₂S - 0.143 GeS2 - 0.142 P₂S₅ (Li₁₀GeP₂S₁₂ (LGPS)), and the like, or a mixture of two or more types can be used.

The average particle size of the sulfide-based solid-state electrolyte is preferably 0.1 µm or more and 20 µm or less. The lower limit is more preferably 0.2 µm or more, and further preferably 0.3 µm or more. The upper limit is more preferably 18 µm or less, and further preferably 15 µm or less.

If the average particle size of the sulfide-based solid-state electrolyte is less than 0.1 µm, handling of the powder may be difficult. On the other hand, if the average particle size of the sulfide-based solid-state electrolyte exceeds 20 µm, press formability may deteriorate.

The average particle diameter of the sulfide-based solid-state electrolyte particles is measured by the following procedure.

A dispersion is prepared by diluting the sulfide-based solid-state electrolyte particles with water (heptane for materials unstable in water) to 1% by mass in a 20 ml sample bottle. Ultrasonic waves of 1 kHz are applied on the diluted dispersion sample for 10 minutes, and immediately after that, the sample is used for the test. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

The method for adjusting the average particle size of the sulfide solid-state electrolyte is not limited, and may be carried out, for example, as follows. A known crusher or classifier is used. For example, a mortar, a sand mill, a ball mill, a jet mill, or a sieve is preferably used. Depending on the properties of the solid-state electrolyte, a solvent such as water or ethanol may be added during crushing. To obtain a desired particle size, it is preferable to perform classification. The classification is not limited, and may be performed using a sieve, a wind classifier, or the like.

The content of the sulfide-based solid-state electrolyte in the solid components of the secondary battery mixture is, when considering a reduction of interfacial resistance and maintenance of the reduced interfacial resistance when used in a secondary battery, with respect to 100% by mass of the solid components, in the electrode preferably 3% by mass or more, more preferably 4% by mass or more, and particularly preferably 5% by mass or more. From the same viewpoint, the upper limit is preferably 99% by mass or less, more preferably 90% by mass or less, and particularly preferably 80% by mass or less.

Further, in the solid-state electrolyte layer provided between the positive electrode and the negative electrode, the content is preferably 50% by mass or more, more preferably 60% by mass or more, and particularly preferably 70% by mass or more. From the same viewpoint, the upper limit is preferably 99.9% by mass or less, more preferably 99.8% by mass or less, and particularly preferably 99.7% by mass or less.

The sulfide-based solid-state electrolyte may be used alone or in combination of two or more. As used herein, the solid content (solid components) refers to the components that do not disappear through volatilization or evaporation when drying is performed at 170°C for 6 hours in a nitrogen atmosphere. Typically, the solid content (solid components) refers to the components other than the dispersion medium described later.

### (Oxide-based solid-state electrolyte)

The above-described oxide-based solid-state electrolyte is preferably a compound that contains an oxygen atom (O), has the ion-conducting property of a metal belonging to Group 1 or Group 2 of the Periodic Table, and has an electron insulating property.

Specific examples of the compound include LiₓₐLa_{ya}TiO₃ (xa=0.3 to 0.7, ya=0.3 to 0.7) (LLT), Li_{xb}La_{yb}Zr_{zb}M^{bb}_{mb}O_{nb} (M^{bb} is at least one or more elements of Al, Mg, Ca, Sr, V, Nb, Ta, Ti, Ge, In, Sn, xb satisfies 5≤xb≤10, yb satisfies 1≤yb≤4, zb satisfies 1≤zb≤4, mb satisfies 0≤mb≤2, and nb satisfies 5≤nb≤20.), Li_{xc}B_{yc}M^{cc}_{zc}O_{nc} (M^{cc} is at least one or more elements of C, S, Al, Si, Ga, Ge, In, Sn, xc satisfies 0≤xc≤5, yc satisfies 0≤yc≤1, zc satisfies 0≤zc≤1, and nc satisfies 0≤nc≤6), Li_{xd}(Al,Ga)_{yd}(Ti,Ge)_{zd}Si_{ad}P_{md}O_{nd} (however, 1≤xd≤3.0≤yd≤2.0≤zd≤2.0≤ad≤2.1≤md≤7.3≤nd≤15), Li₍₃₋₂ₓₑ₎M^{ee}ₓₑD^{ee}O (xe represents a number of 0 or more and 0.1 or less, M^{ee} represents a divalent metal atom; D^{ee} represents a halogen atom or a combination of two or more halogen atoms), Li_{xf}Si_{yf}O_{zf} (1≤xf≤5.0<yf≤3.1≤zf≤10), Li_{xg}S_{yg}O_{zg} (1≤xg≤3.0< yg≤2.1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w is w<1), Li_{3.5}Zn_{0.25}GeO₄ having a LISICON (Lithium super ionic conductor) type crystal structure; La_{0.51}Li_{0.34}TiO_{2.94}, La_{0.55}Li_{0.35}TiO₃ having a perovskite type crystal structure; LiTi₂P₃O₁₂ having a NASICON (Natrium super ionic conductor) type crystal structure, Li_{1+xh+yh}(Al,Ga)ₓₕ(Ti,Ge)₂₋ₓₕSi_{yh}P_{3-yh}O₁₂ (however, 0≤xh≤1.0≤yh≤1), further examples include Li₇La₃Zr₂O₁₂ (LLZ) having a garnet-type crystal structure. Further, ceramic materials obtained by substituting an element into LLZ are also known. Examples of such ceramic materials include LLZ-based ceramic materials in which at least one of Mg (magnesium) and A (A is at least one element selected from the group consisting of Ca (calcium), Sr (strontium), and Ba (barium)) is substituted into the LLZ. Further, phosphorus compounds containing Li, P, and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like), and the like. It is also possible to preferably use LiA¹ON (A¹ represents at least one element selected from Si, B, Ge, Al, C, Ga, or the like) and the like.

Specific examples include Li₂O-Al₂O₃-SiO₂-P₂O₅-TiO₂-GeO₂, Li₂O-Al₂O₃-SiO₂-P₂O₅-TiO₂, and the like.

The oxide-based solid-state electrolyte preferably contains lithium. Lithium-containing oxide-based solid-state electrolytes are used in solid-state batteries that use lithium ions as carriers, and are particularly preferred for electrochemical devices having a high energy density.

The oxide-based solid-state electrolyte is preferably an oxide having a crystal structure. Oxides having a crystal structure are particularly preferred in terms of having a good Li-ion-conducting property.

Examples of oxides having a crystal structure include perovskite type (La_{0.51}Li_{0.34}TiO_{2.94} etc.), NASICON type (Li_{1.3}Al_{0.3}Ti_{1.7}(PO₄)₃ etc.), garnet type (Li₇La₃Zr₂O₁₂ (LLZ), etc.), and the like. Among them, the NASICON type is preferable.

The volume average particle size of the oxide-based solid-state electrolyte is not limited, but is preferably 0.01 µm or more, and more preferably 0.03 µm or more. The upper limit is preferably not more than 100 µm, and more preferably not more than 50 µm. The average particle size of the oxide-based solid-state electrolyte particles is measured by the following procedure. A dispersion is prepared by diluting the oxide-based solid-state electrolyte particles with water (heptane for materials unstable in water) to 1% by mass in a 20 ml sample bottle. Ultrasonic waves of 1 kHz are applied on the diluted dispersion sample for 10 minutes, and the test is immediately carried out after that. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

### (Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. One type of these may be used alone, or two or more types may be used in any combination or ratio.

In the case of using a conductive aid, the conductive aid is used such that it has a content in the electrode active material layer of usually 0.01% by mass or more, preferably 0.1% by mass or more, and more preferably 0.5% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Other components)

The secondary battery mixture sheet may further include a thermoplastic resin.

Examples of the thermoplastic resin include polyvinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually 3.0% by mass or less, preferably 2.5% by mass or less, and more preferably 2.0% by mass or less. By adding a thermoplastic resin, the mechanical strength of the electrode can be improved. If this range is exceeded, the proportion of the active material in the secondary battery mixture will decrease, which may cause problems such as a decrease in battery capacity and an increase in resistance between active materials.

The secondary battery mixture of the present disclosure is particularly suitable for a lithium ion solid-state secondary battery.

Further, the secondary battery mixture of the present disclosure is suitable for a sulfide-based solid-state secondary battery.

The secondary battery mixture of the present disclosure is typically used in sheet form when used in a solid-state secondary battery.

The secondary battery mixture sheet of the present disclosure can be a sheet for a positive electrode or a sheet for a negative electrode. Further, it can be a sheet for a solid-state electrolyte layer. Among these, when used as an electrode sheet, the secondary battery mixture sheet of the present disclosure further contains active material particles. The active material particles can be used as a positive electrode active material or a negative electrode active material. The secondary battery sheet of the present disclosure can be more suitably used as a positive electrode sheet using a positive electrode active material. Moreover, when used as an electrode sheet, the secondary battery mixture sheet of the present disclosure may optionally contain a conductive aid.

### (Non-aqueous electrolytic solution)

When the secondary battery mixture of the present disclosure is used in a battery having a non-aqueous electrolytic solution, the non-aqueous electrolytic solution is not limited to, and examples include one or more of known solvents such as propylene carbonate, ethylene carbonate, butylene carbonate, γ-butyllactone, 1,2-dimethoxyethane, 1,2-diethoxyethane, dimethyl carbonate, diethyl carbonate, ethylmethyl carbonate. Any conventionally known electrolyte can be used, such as LiClO₄, LiAsF₆, LiPF₆, LiBF₄, LiCl, LiBr, CH₃SO₃Li, CF₃SO₃Li, and cesium carbonate.

### (Production method)

The method for producing a secondary battery mixture sheet of the present disclosure preferably uses a raw material composition obtained by mixing the components described above, and forms this raw material composition into a sheet. When forming the sheet, a drying process can be omitted, and thus a method in which a shear stress is applied to the raw material composition, which is a powder, either by reducing the amount of liquid medium used or not using a liquid medium at all, and a slurry is not prepared, is preferable. Further, a small amount of solvent may be added as a lubricant to reduce the load on the device. The solvent is preferably an organic solvent, and the amount of solvent contained is, with respect to the raw material composition, preferably 10% by mass or less, more preferably 5% by mass or less, and further preferably 3% by mass or less.

The secondary battery mixture sheet of the present disclosure can also be obtained by a method for producing a secondary battery mixture sheet having:
a step (1) of applying a shear force while mixing a raw material composition including a solid-state electrolyte and/or electrode active material, and a binder;
a step (2) of forming the secondary battery mixture obtained in step (1) into a bulk shape; and
a step (3) of rolling the bulk-shape secondary battery mixture obtained in step (2) into a sheet shape.

At the stage of applying a shear force while mixing the raw material composition in step (1), the obtained secondary battery mixture is present in an undetermined form in which the solid-state electrolyte, binder, and the like are simply mixed. Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, a Henschel mixer, high-speed mixer, and the like.

In the above step (a), the mixing conditions may be appropriately set in terms of rotation speed and mixing time. For example, the number of revolutions is preferably 15,000 rpm or less. The number of revolutions is in the range of preferably 10 rpm or more, more preferably 1,000 rpm or more, and further preferably 3,000 rpm or more, and is in the range of preferably 12,000 rpm or less, more preferably 11,000 rpm or less, and further preferably 10,000 rpm or less. If the number of rotations is less than the above range, the mixing takes time, which affects productivity. On the other hand, if the number of rotations exceeds the above range, excessive fibrillation may occur, resulting in an electrode mixture sheet with inferior strength.

In step (1), the mixing is preferably carried out at a temperature of 30°C or higher, and more preferably 60°C or higher.

Further, it is preferable to include a step (A) of mixing and dispersing the raw material composition before the step (1). In step (A), it is preferable to perform the mixing with as small a shear force as possible.

In step (A), the mixing conditions may be appropriately set in terms of rotation speed and mixing time. For example, the rotation speed is preferably 1000 rpm or less. More preferably, the rotation speed is 500 rpm or less. The lower limit is preferably 10 rpm or more, more preferably 15 rpm or more, and further preferably 20 rpm or more. If the rotation speed is less than the above range, the mixing takes time, which affects productivity. On the other hand, if the rotation speed exceeds the above range, excessive fibrillation may occur, resulting in an electrode mixture sheet with inferior strength. Further, by kneading at room temperature or lower, the raw material composition can be dispersed while suppressing fibrillation.

In step (A), the mixing temperature is preferably 19°C or lower.

By using such a temperature range, it is possible to process into a desired sheet shape in a shorter time.

PTFE has two transition temperatures at about 19°C and about 30°C. Below 19°C, PTFE can be easily mixed while maintaining its shape. However, above 19°C, the structure of the PTFE particles becomes looser, and the PTFE becomes more sensitive to mechanical shear. At temperatures above 30°C, a higher degree of fibrillation begins to occur.

For this reason, when a PTFE resin is used as the fibrillatable resin, it is preferred that step (A) is carried out at a temperature of 19°C or lower, and preferably 0°C to 19°C.

That is, in such step (A), it is preferable to achieve homogenization by mixing without causing fibrillation. It is then preferable to perform fibrillation in the subsequent steps (1) to (5).

In step (2), forming into a bulk shape means forming the secondary battery mixture into one mass.

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter of the cross section or the minimum size is 10,000 µm or more, and more preferably 20,000 µm or more.

Examples of the specific rolling method in step (3) include a method of rolling using a roll press machine, a flat plate press machine, a calender roll machine, or the like.

Further, it is also preferable to have, after the step (3), a step (4) of applying a larger load to the obtained roll sheet and rolling it into a thinner sheet. It is also preferable to repeat step (4). In this way, the flexibility is improved by rolling the sheet little by little in stages instead of thinning the roll sheet all at once.

The number of times that step (4) is carried out is preferably 2 or more and 10 or less, and more preferably 3 or more and 9 or less.

A specific rolling method is to, for example, rotate two or a plurality of rolls and pass the roll sheet between the rolls to form a thinner sheet.

Further, from the viewpoint of adjusting the fibril diameter, it is preferable to have, after step (3) or step (4), a step (5) of coarsely crushing the roll sheet, then again forming into a bulk shape, and rolling into a sheet. It is also preferable to repeat step (5). The number of times that step (5) is carried out is preferably 1 time or more and 12 times or less, and more preferably 2 times or more and 11 times or less.

In step (5), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (3) or step (4) into another form for rolling into a sheet shape in the next step, and may include a case of simply folding a roll sheet.

Step (4) may be performed after step (5), or may be performed repeatedly.

Further, uniaxial stretching or biaxial stretching may be carried out in step (2) as well as steps (3), (4), and (5).

In addition, the fibril diameter (median value) can also be adjusted by the degree of coarse crushing in step (5) .

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in a secondary battery mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling.

As described above, PTFE powder becomes fibrillated by applying a shear force. In order to have a fibrous structure with a fibril diameter (median value) of 100 nm or less, if the shear stress is excessive, excessive fibrillation may proceed, which impairs flexibility. Further, if shear stress is weak, strength may not be sufficient. For this reason, during mixing and rolling, the resin is rolled and stretched into a sheet by applying an appropriate shear stress to the PTFE to promote fibrillation, whereby a fibrous structure with a fibril diameter (median value) of 100 nm can be obtained.

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling.

The above steps (2) to (5) are preferably performed at a temperature of 30°C or higher, and more preferably 60°C or higher.

As described above, the PTFE powder becomes fibrillated by applying shear force. In order to have a fibrous structure with a fibril diameter (median value) of 100 nm or less, if the shear stress is excessive, excessive fibrillation may proceed, which impairs flexibility. Further, if shear stress is weak, strength may not be sufficient. For this reason, during mixing and rolling, the resin is rolled and stretched into a sheet by applying an appropriate shear stress to the PTFE to promote fibrillation, whereby a fibrous structure with a fibril diameter (median value) of 100 nm can be obtained.

As described above, the secondary battery mixture sheet of the present disclosure can be either a sheet for a positive electrode or a sheet for a negative electrode. When used as a mixture sheet for a positive electrode or a sheet for a negative electrode, in the production of the secondary battery mixture sheet, the positive electrode active material or negative electrode active material may be mixed with the solid-state electrolyte and the binder.

The positive electrode and negative electrode are described below.

### (Positive electrode)

In the present disclosure, it is preferable that the positive electrode is constructed from a current collector and the above-described sheet for a positive electrode.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The positive electrode may be produced according to a conventional method. For example, a method of laminating the sheet for a positive electrode and the current collector with an adhesive between them and drying the laminate can be used.

The density of the sheet for a positive electrode is preferably 2.0 g/cm³ or more, more preferably 2.1 g/cm³ or more, and further preferably 2.3 g/cm³ or more, and preferably 4.0 g/cm³ or less, more preferably 3.9 g/cm³ 3 or less, and further preferably 3.8 g/cm³ or less. If the density exceeds this range, the electric conductivity between the active materials decreases, the battery resistance increases, and a high output may not be obtained. If the density is lower than this range, the obtained battery may be hard, tend to crack, have a low active material content, and have a low capacity.

The thickness of the positive electrode is not limited, but from the viewpoint of a high capacity and a high output, the thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### (Negative electrode)

In the present disclosure, it is preferable that the negative electrode is constructed from a current collector and the above-described sheet for a negative electrode.

Examples of the material of the current collector for the negative electrode include metals such as copper, nickel, titanium, tantalum, stainless steel, and nickel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

The negative electrode may be produced according to a conventional method. For example, a method of laminating the sheet for a negative electrode and the current collector with an adhesive between them and drying the laminate can be used.

The density of the sheet for a negative electrode is preferably 1.3 g/cm³ or more, more preferably 1.4 g/cm³ or more, and further preferably 1.5 g/cm³ or more, and preferably 2.0 g/cm³ or less, more preferably 1.9 g/cm³ or less, and further preferably 1.8 g/cm³ or less. If the density exceeds this range, the penetration of the solid-state electrolyte near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the metal foil thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

### (Secondary battery)

The present disclosure also relates to a secondary battery including the above-described secondary battery mixture sheet.

Preferably, the secondary battery is a lithium ion battery. Further, the secondary battery may be a solid-state battery or a secondary battery containing a liquid electrolyte.

The secondary battery of the present disclosure is a secondary battery that includes the above-described secondary battery mixture sheet of the present disclosure as a positive electrode. Here, the negative electrode and the solid-state electrolyte layer are not limited, and any known negative electrode and the solid-state electrolyte layer can be used.

The separator and the battery case used in the secondary battery according to the present disclosure will be described in detail below.

The secondary battery of the present disclosure may be produced by, for example, first laminating the positive electrode, the solid-state electrolyte layer sheet, and the negative electrode in this order, and then pressing to form a secondary battery.

It is preferable to use the secondary battery mixture sheet of the present disclosure because this enables a secondary battery to be produced with less moisture in the system, and a secondary battery with a good performance can be obtained.

### (Secondary battery using electrolytic solution)

An electrode produced using the secondary battery mixture sheet of the present disclosure can be used as a positive electrode or a negative electrode in various secondary batteries using an electrolytic solution. The secondary battery is a battery using a non-aqueous electrolytic solution, and examples thereof can include a lithium ion battery.

### (Electrolytic solution)

As the non-aqueous electrolytic solution, a known electrolyte salt dissolved in a known organic solvent for dissolving the electrolyte salt can be used.

Examples of the organic solvent for the dissolving electrolyte salt include, but are not limited to, one or more known hydrocarbon-based solvents, such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorinated solvents, such as fluoroethylene carbonate, fluoroether, and fluorinated carbonate.

Examples of the electrolyte salt include LiClO₄, LiAsF₆, LiBF₄, LiPF₆, LiN(SO₂CF₃)₂, LiN(SO₂C₂F₅)₂, and the like, and from the viewpoint of having good cycle characteristics, LiPF₆, LiBF₄, LiN(SO₂CF₃)₂, LiN(SO₂C₂F₅)₂, or a combination thereof is particularly preferred.

The concentration of the electrolyte salt needs to be 0.8 mol/liter or more, and more preferably 1.0 mol/liter or more. The upper limit depends on the organic solvent for dissolving the electrolyte salt, but is usually 1.5 mol/liter or less.

### (Battery design)

The electrode mixture group may have a laminated structure in which the above-described positive electrode and negative electrode are interposed with a separator in between, or may have a structure in which the above-described positive electrode and negative electrode are spirally wound with the separator interposed therebetween.

### (Separator)

The material and shape of the separator are not limited as long as they are stable to the electrolytic solution and have excellent liquid retention properties, and known materials can be used. For example, resin, glass fiber, inorganic materials, and the like may be used, and it is preferable to use a porous sheet, nonwoven fabric, or the like having excellent liquid retention properties.

As the material of the resin or glass fiber separator, for example, a polyolefin such as polyethylene or polypropylene, an aromatic polyamide, PTFE, polyethersulfone, a glass filter, or the like can be used. These materials may be used alone or in combination of two or more in any combination and ratio, for example, as a polypropylene/polyethylene two-layer film or a polypropylene/polyethylene/polypropylene three-layer film.

Among these, from the viewpoint of having good electrolytic solution permeability and a good shut-down effect, the separator is preferably a porous sheet, nonwoven fabric, or the like made from a polyolefin such as polyethylene or polypropylene as a raw material.

Further, when using a porous material such as a porous sheet or a nonwoven fabric as the separator, the porosity of the separator may be any porosity, but is usually 20% or more, preferably 35% or more, and more preferably 45% or more. Further, the porosity is usually 90% or less, preferably 85% or less, and more preferably 75% or less. If the porosity is too much lower than the above range, membrane resistance tends to increase and the rate characteristics tend to deteriorate. Moreover, if the porosity is too much higher than the above range, the mechanical strength of the separator tends to decrease and the insulating property tends to decrease.

Further, the average pore size of the separator is also any pore size, but it is usually 0.5 µm or less, preferably 0.2 µm or less, and usually 0.05 µm or more. If the average pore size exceeds the above range, short circuits tend to occur. If the average pore size is below the above range, the film resistance may increase and the rate characteristics may deteriorate.

On the other hand, as the inorganic material, for example, oxides such as alumina and silicon dioxide, nitrides such as aluminum nitride and silicon nitride, and sulfates such as barium sulfate and calcium sulfate are used, and a material in the form of particles or fibers is used.

The separator is in the form of a thin membrane of a nonwoven fabric, a woven fabric, a microporous film, and the like. It is preferred to use a thin membrane having a pore size of 0.01 to 1 µm and a thickness of 5 to 50 µm. In addition to the independent thin membrane configuration described above, a separator can be used in which a composite porous layer containing the above-described inorganic particles is formed on the surface layer of the positive electrode and/or negative electrode using a resin binder.

For example, a porous layer may be formed on both sides of the positive electrode using alumina particles having a 90% particle size of less than 1 µm and a fluororesin as a binder.

The material of exterior case is not limited as long as it is stable to the electrolytic solution used. Specifically, a metal such as a nickel-plated steel plate, stainless steel, aluminum or an aluminum alloy, or a magnesium alloy, or a laminated film of a resin and aluminum foil is used. From the viewpoint of reducing weight, it is preferred to use a metal of aluminum or an aluminum alloy, or a laminate film.

Examples of exterior cases that use a metal include a hermetically sealed structure obtained by welding metal pieces together by laser welding, resistance welding, or ultrasonic welding, and a caulked structure obtained by caulking the metal pieces together using a resin gasket. Examples of exterior cases that use a laminate film include a hermetically sealed structure obtained by heat-sealing resin layers together. In order to improve sealability, a resin different from the resin used for the laminate film may be interposed between the resin layers. In particular, when using a sealed structure obtained by heat-sealing a resin layer via a current collector terminal, the metal and resin are joined together, and so it is preferred to use as the interposing resin a resin having a polar group or a modified resin having a polar group introduced therein.

The shape of the secondary battery may be any shape, and examples thereof include a cylindrical shape, a square shape, a laminate shape, a coin shape, a large-sized shape, and the like. The shape and configuration of the positive electrode, negative electrode, and separator can be changed in accordance with the shape of each battery.

### Examples

Hereinafter, the present disclosure will be specifically described based on examples.

In the following examples, "parts" and "%" represent "parts by mass" and "% by mass", respectively, unless otherwise specified.

### [Production Example 1]

At the point when 367 g of TFE (35.6% by mass with respect to the total polymerization amount of TFE of 1032 g) was consumed from the start of polymerization, an aqueous solution of 12.0 mg of hydroquinone as a radical scavenger dissolved in 20 ml of water was charged under pressure with TFE (concentration 4.0 ppm with respect to the aqueous medium). Polymerization was continued thereafter, and when the polymerized amount of TFE reached 1,000 g from the start of polymerization, the supply of TFE was stopped, gas in the system was immediately released to achieve normal pressure, the polymerization reaction ended, and an aqueous dispersion of polytetrafluoroethylene (solid content 31.2% by mass) was obtained. The resulting aqueous dispersion of polytetrafluoroethylene was diluted to a solid content concentration of 15%, and gently stirred in a container equipped with a stirrer in the presence of nitric acid to solidify the polytetrafluoroethylene. The solidified polytetrafluoroethylene was separated and dried at 160°C for 18 hours to obtain powdered PTFE-1.

### [Production Example 2]

Powdered PTFE-2 was obtained by referring to Production Example 3 of International Publication No. WO 2015-080291.

### [Production Example 3]

Powdered PTFE-3 was obtained by referring to Production Example 1 of International Publication No. WO 2012/086710.

### [Production Example 4]

Powdered PTFE-4 was obtained by referring to Reference Example 1 of International Publication No. WO 2012-063622.

Table 1 shows the physical properties of the produced PTFE.

**[Table 1]**

| Produced PTFE | Standard specific gravity | Moisture content (ppm) after drying |
|---|---|---|
| PTFE-1 | 2.16 | <250 |
| PTFE-2 | 2.15 | <250 |
| PTFE-3 | 2.16 | <250 |
| PTFE-4 | 2.19 | <250 |

### (Example 1)

A positive electrode active material (LiNi _{0.8}Mn_{0.1}Co_{0.1}O₂), a conductive aid (carbon black: Super P Li), and powdered PTFE-1 were weighed, and stirred with a high-speed mixer (500 rpm, 1 minute). The stirring was performed by cooling the container to 10°C. Then, the mixture was stirred with a high-speed mixer (10000 rpm, 3 minutes) to obtain a mixture. The stirring was performed by heating the container to 60°C.

It is noted that the powdered PTFE-1 that was used had been dried in a vacuum dryer at 50°C for 1 hour. The powdered PTFE had been sieved in advance using a stainless steel sieve with an opening of 500 µm, and the material remaining on the sieve was used. The composition ratio was adjusted as shown in Table 2.

The obtained mixture was formed into a bulk shape and rolled into a sheet. The rolling was performed by heating to 80°C.

Then, a step coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a secondary battery mixture sheet with a thickness of 500 µm. Further, the secondary battery mixture sheet was cut, put into a press, and rolled. The thickness was adjusted by repeatedly applying a load of 5 kN. The gap was adjusted so that the thickness of the final secondary battery mixture sheet was 150 µm. The first roll rate was the largest at 39%.

### (Example 2)

A sheet was formed based on the same procedure as in Example 1 using powdered PTFE-3 and adjusting to the composition ratio shown in Table 2.

### (Example 3)

A sheet was formed based on the same procedure as in Example 1 using powdered PTFE-2 and adjusting to the composition ratio shown in Table 2.

### (Example 4)

A sheet was formed based on the same procedure as in Example 1 using powdered PTFE-4 and adjusting to the composition ratio shown in Table 2.

### (Example 5)

A sheet was formed based on the same procedure as in Example 1 using powdered PTFE-1 and adjusting to the composition ratio shown in Table 2.

### (Example 6)

A sulfide-based solid-state electrolyte (0.75 Li₂S-0.25 P₂S₅) instead of a conductive aid, a positive electrode active material (LiNi_{0.8}Mn_{0.1}Co_{0.1}O₂), and powdered PTFE-1 were weighed, and formed into a sheet based on the same procedure as in Example 1 using the powdered PTFE-1 and adjusting to the composition ratio shown in Table 2.

### (Example 7)

A sulfide-based solid-state electrolyte (0.75 Li₂S-0.25 P₂S₅) instead of a conductive aid, a positive electrode active material (LiNi_{0.8}Mn_{0.1}Co_{0.1}O₂), and powdered PTFE-4 were weighed, and formed into a sheet based on the same procedure as in Example 1 using the powdered PTFE-4 and adjusting to the composition ratio shown in Table 2.

### (Example 8)

A sulfide-based solid-state electrolyte (Li₁₀GeP₂S₁₂), a positive electrode active material (LiNi_{0.8}Mn_{0.1}Co_{0.1}O₂), a conductive aid, and powdered PTFE-4 were weighed, and formed into a sheet based on the same procedure as in Example 1 using the powdered PTFE-4 and adjusting to the composition ratio shown in Table 2.

### (Comparative example 1)

The positive electrode active material LiNi_{0.8}Mn_{0.1}Co_{0.1}O₂, a conductive aid (carbon black: Super P Li) and powdered PTFE-4 were weighed, and stirred with a high-speed mixer (10000 rpm, 4 minutes) to obtain a mixture. The stirring was performed by heating the container to 60°C.

It is noted that the powdered PTFE-4 had been dried in a vacuum dryer at 50°C for 1 hour. The powdered PTFE had been sieved in advance using stainless steel sieves with openings of 425 µm and 355 µm. The material that passed through the sieve with an opening of 425 µm and remained on the sieve with an opening of 355 µm was used. The composition ratio was adjusted as shown in Table 2.

The resulting mixture was formed into a bulk shape and rolled into a sheet. The rolling was performed at room temperature.

Then, a step of coarsely crushing the roll sheet obtained in the previous step by folding it in two, forming again into a bulk shape, and then rolling into a sheet shape using a metal roll on a flat plate to promote the formation of fibrils was repeated three times. After that, the sheet was further rolled to obtain a secondary battery mixture sheet with a thickness of 500 µm. Further, the secondary battery mixture sheet was cut, put into a press, and rolled. The thickness was adjusted by repeatedly applying a load of 5 kN. The gap was adjusted so that the thickness of the final secondary battery mixture sheet was 150 µm.

Each test was carried out as follows.

### [Measurement of moisture content]

The powdered PTFE was dried in a vacuum dryer at 50°C for 1 hour before use. Using a Karl Fischer moisture meter (ADP-511/MKC-510N, manufactured by Kyoto Electronics Industry Manufacturing Co., Ltd.) equipped with a boat-type moisture vaporizer, the moisture content of the PTFE after the vacuum drying was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

### [PTFE fibril diameter (maximum fibril diameter, median value, third quartile of fibril diameter)]

(1) Using a scanning electron microscope (Model S-4800, manufactured by Hitachi, Ltd.), an enlarged photograph (7,000x) of the sheet-shaped solid-state electrolyte layer was taken to obtain an image.
(2) Two lines equidistant from each other were drawn on the image in the horizontal direction to divide the image into three equal parts.
(3) The diameter of each PTFE fiber on the upper straight line was measured at three locations, and the average value was taken as the PTFE fiber diameter. The three locations to be measured were the intersection between the PTFE fiber and the straight line, and the locations 0.5 µm above and below the intersection (PTFE primary particles not formed into fibrils are excluded).
(4) The task of (3) above was then carried out for all the PTFE fibers on the lower straight line.
(5) Starting from the first image, the secondary battery mixture sheet was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter. The average value, standard deviation, third quartile, and maximum value were determined in the same manner. It is noted that the maximum value means the maximum value among 80 measured fibers.

### [Flexibility evaluation]

A 2 cm long and 6 cm wide test piece was cut from the produced solid-state electrolyte sheet. The test piece was wound around a round bar with a diameter of 4 mm, and then visually observed and evaluated according to the following criteria. Cases in which damage or cracks were not observed were evaluated as "pass" (circle), and cases in which cracks were observed were evaluated as "fail" (cross).

### [Strength measurement]

Using a digital force gauge (ZTS-20N manufactured by Imada), the strength of a strip-shaped electrode mixture test piece with a width of 4 mm under the condition of 100 mm/min was measured. The chuck-to-chuck distance was 30 mm. Displacement was applied until breakage, and the maximum stress obtained in the measured results was taken as the strength of each sample. The tests were carried out five times, and the average value was taken as the strength.

The test results are shown in Table 2.

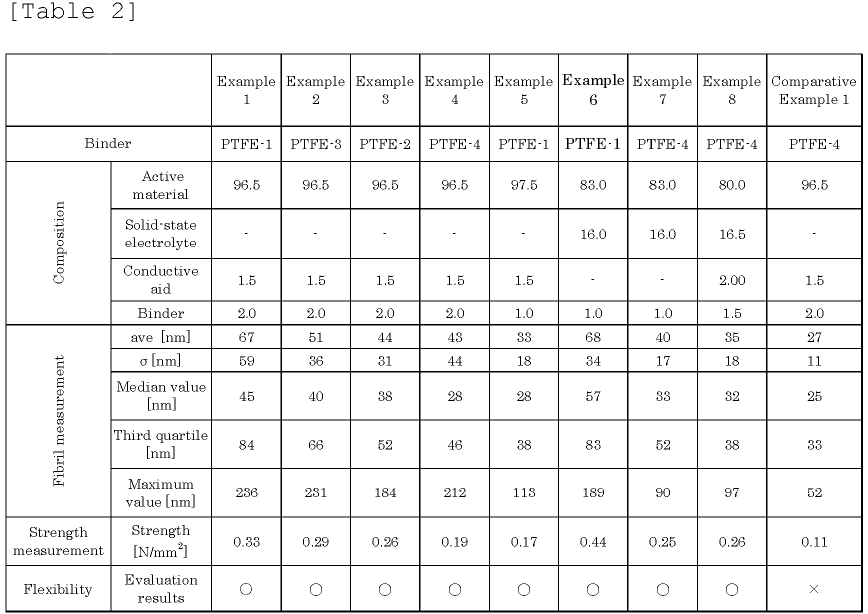

Next, a gold electrode was formed on the surface of the positive electrode mixture sheet produced in Example 7 by sputtering.

Then, a sulfide-based solid-state electrolyte (0.75 Li₂S-0.25 P₂S₅) and PTFE-4 were kneaded at a ratio of 98:2, and formed into a solid-state electrolyte sheet having a thickness of 200 µm.

The prepared solid-state electrolyte sheet, Li foil, and an insulating sheet were stacked thereon. The stack was integrated by uniaxially forming for 3 minutes under a load of 60 kN, and a half cell was produced by punching to a diameter of 10 mm. The produced half cell was placed in a flat cell and placed in a bath at 45°C for 12 hours. Charging and discharging were performed at 0.1 C (0.05 C cut).

As a result of eight charging and discharging cycles, based on 100% at the third cycle, the capacity retention rate at the eighth cycle was 98.6%.

From the results in Table 2, it can be seen that the sheet-shaped solid-state electrolyte layer of Examples had excellent physical properties.

### Industrial Applicability

The secondary battery mixture of the present disclosure and the secondary battery mixture sheet containing the same can be used to produce a solid-state secondary battery.

## Claims

1. A secondary battery mixture, comprising a solid-state electrolyte and/or electrode active material, and a binder, wherein
the binder is a fibrillatable resin, and
the fibrillatable resin has a fibrous structure with a maximum fibril diameter of 90 nm or more.

2. A secondary battery mixture, comprising a solid-state electrolyte and/or electrode active material, and a binder, wherein
the binder is a fibrillatable resin, and
the fibrillatable resin has a fibrous structure in which a third quartile of a fibril diameter is 35 nm or more.

3. The secondary battery mixture according to claim 1 or 2, wherein the fibrillatable resin has a fibrous structure with a median value of the fibril diameter of 100 nm or less.

4. The secondary battery mixture according to any of claims 1 to 3, which is for a lithium ion secondary battery.

5. The secondary battery mixture according to any of claims 1 to 4, which is obtained by using a raw material composition containing a solid-state electrolyte and/or electrode active material, and a binder, wherein
the binder in the raw material composition is a powdered polytetrafluoroethylene resin.

6. The secondary battery mixture according to claim 5, wherein the powdered polytetrafluoroethylene resin has a moisture content of 500 ppm or less.

7. The secondary battery mixture according to claim 5 or 6, wherein the powdered polytetrafluoroethylene resin has a standard specific gravity of 2.12 to 2.20.

8. The secondary battery mixture according to any of claims 5 to 7, wherein the powdered polytetrafluoroethylene resin includes 50% by mass or more of a polytetrafluoroethylene resin having a secondary particle size of 450 µm or more.

9. The secondary battery mixture according to any of claims 5 to 8, wherein the powdered polytetrafluoroethylene resin includes 80% by mass or more of a polytetrafluoroethylene resin having a secondary particle size of 450 µm or more.

10. The secondary battery mixture according to any of claims 1 to 9, wherein the electrode active material is a positive electrode active material.

11. The secondary battery mixture according to any one of claims 1 to 10, which is for a solid-state secondary battery.

12. A secondary battery mixture sheet comprising the secondary battery mixture according to any one of claims 1 to 11.

13. An electrode comprising the secondary battery mixture sheet according to claim 12.

14. A method for producing a secondary battery mixture sheet comprising:
a step (1) of applying a shear force while mixing a raw material composition including a solid-state electrolyte and/or electrode active material, and a binder;
a step (2) of forming the secondary battery mixture obtained in step (1) into a bulk shape; and
a step (3) of rolling the bulk-shape secondary battery mixture obtained in step (2) into a sheet shape,
wherein the binder is a powdered fibrillatable resin having a fibrous structure with a maximum fibril diameter of 90 nm or more.

15. A secondary battery comprising the secondary battery mixture sheet according to claim 12.
